# EUROPEAN PATENT APPLICATION

(11) **EP 3 582 502 A1**
(43) Date of publication of application: **18.12.2019**
(21) Application number: 19020388.5
(22) Date of filing: 17.06.2019
(51) Int. Cl.: H04N 21/25, H04N 21/27

(54) **SYSTEM AND METHOD FOR SENDING MULTIMEDIA TO A REMOTE TELEVISION**

(30) Priority: 15.06.2018 CA 3008516; 06.07.2018 US 201816029249
(71) Applicant: Telus Communications Inc., Vancouver, BC V6B 0M3 (CA)
(72) Inventor: Niles, Denis, Ottawa Ontario K1M 2K5 (CA)
(74) Representative: Shanks, Andrew

(57) **Abstract**

A system and method for sending multimedia to a remote television. Credential information associated with at least a first user and a second user is stored. A request is received from a mobile device associated with the first user to share multimedia with a destination television associated with the second user. It is determined whether the second user is authorized to receive the multimedia from the first user using the stored credential information. A connection is established between the mobile device and the destination television after determining that the second user is authorized to receive the multimedia. The multimedia is transmitted to the destination television in real-time. The multimedia is stored no more than transiently during transmission from the mobile device to the destination television.

## Description

### TECHNICAL FIELD

The disclosed systems and methods relate to sending multimedia to a remote television.

### BACKGROUND

Today, sharing pictures and videos taken on a smart device, such as a smartphone, tablet or mobile laptop, to a big screen TV with friends and family who live at a distance is possible but there are often many steps and usually added equipment required to achieve this. Additionally, the individuals attempting to share the multimedia often need to understand the technology in some detail, including how to install or configure the equipment. Furthermore, the shared data is often not private once it leaves the smart device. The reason for this is that there is such a disparate plethora of technologies to understand, choose from and configure to enable such a service.

In some current systems, if an individual located in one location, such as Squamish, BC, Canada took some great pictures and video clips with his smartphone, he may wish to share them with family and friends who reside in a distant part of Canada such as Hawkesbury, Ontario.

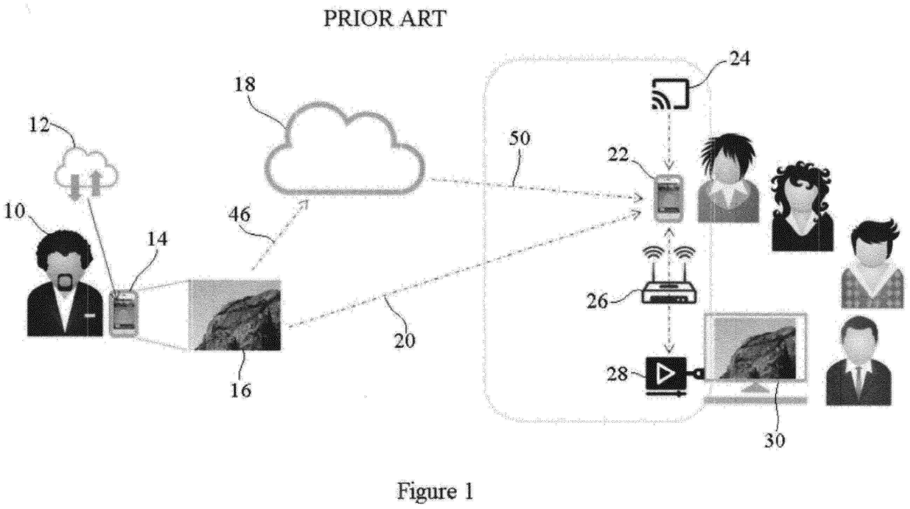

One known method to attempt to send the photos to the remote TV would require a significant number of steps in order to transfer the photo or video. The following components of the system would be required to send the picture or video as shown in Fig. 1:
a. a smartphone, tablet or laptop 14 connected to local WiFi,
b. a casting app 24, such as the Chromecast™ app, installed on a receiving smartphone 22 and able to connect to a set-top device 28, such as a Google Chromecast™ set-top device, through a local WiFi router 26,
c. a set-top device 28 configured to connect to smartphone via local WiFi and to a TV 30 via HDMI port,
d. a cloud storage mobile app 12 and a cloud storage service 18 with sharing functionality and
e. the WiFi router 26 providing connectivity.

As shown in Fig. 1, a user 10 has photos and videos on a mobile device 14 that is connected to the cloud storage mobile app 12. Photos and videos 16 are either uploaded at 46 to the photo and video cloud storage service 18 where they can be downloaded at 50 to the smartphone 22, or they can be sent through an email or text attachment at 20 to the smartphone 22. The casting app 24 installed on the smartphone allows the images to be downloaded. The smartphone 22 sends the images to set-top device 28 using the local WiFi router 26. The set-top box 28 displays the images on the TV 30 using the HDMI cable connection. In this type of setup, the casting app 24, the smartphone 22, WiFi router 26 and set-top box 28 are all necessary components to have in place to view a picture or video from someone located in a distance location. The cloud storage service 18 could be a service such as Google Drive™, OneDrive™, iCloud™, or Dropbox™. The set-top box could be a system such as Amazon Fire™ TV, Apple TV™, Google Chromecast™, Roku™ boxes, Smart-TV built-in, Xbox 360™, or Xbox One™. The casting app could be an app such as Allcast™, LocalCast™, Plex™, MegaCast™ or Netflix™. The various steps required to share the photos and videos in this arrangement are cumbersome and time-consuming for the individuals involved.

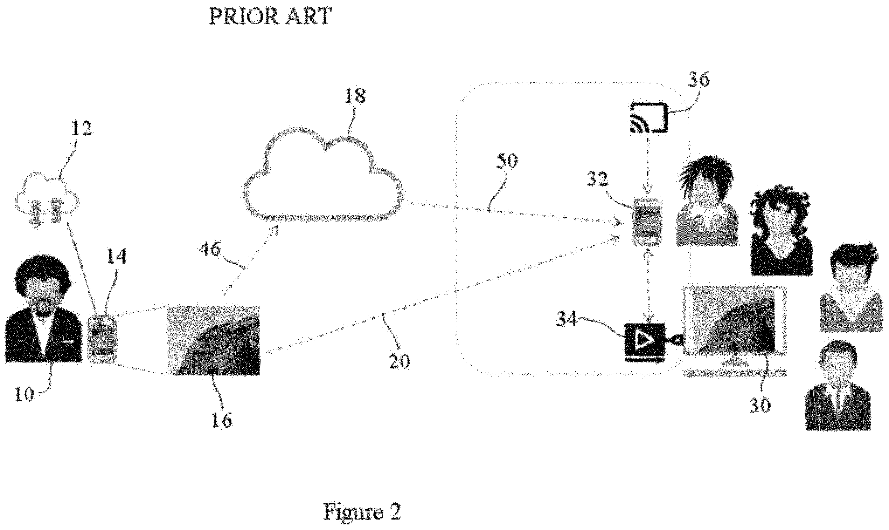

Fig. 2 shows a similar method of sharing pictures and videos from a remote location to that shown in Fig. 1. However, in Fig. 2, unlike Fig. 1, a smartphone 32 and set-top box 34 are connected by WifiDirect, DNLA or AirPlay™ peer-to-peer protocol. In the method set out in Fig. 2, at least the following components are necessary: (a) the smartphone, tablet or laptop 32, (b) a casting app 36 on the smartphone allowing it to connect to the set-top box 34, (c) the set-top box 34 configured to connect to the smartphone 32 via WifiDirect, DNLA or AirPlay™ and connected to the TV 30 by an HDMI port, and (d) the cloud storage app 12 and the cloud storing service 18.

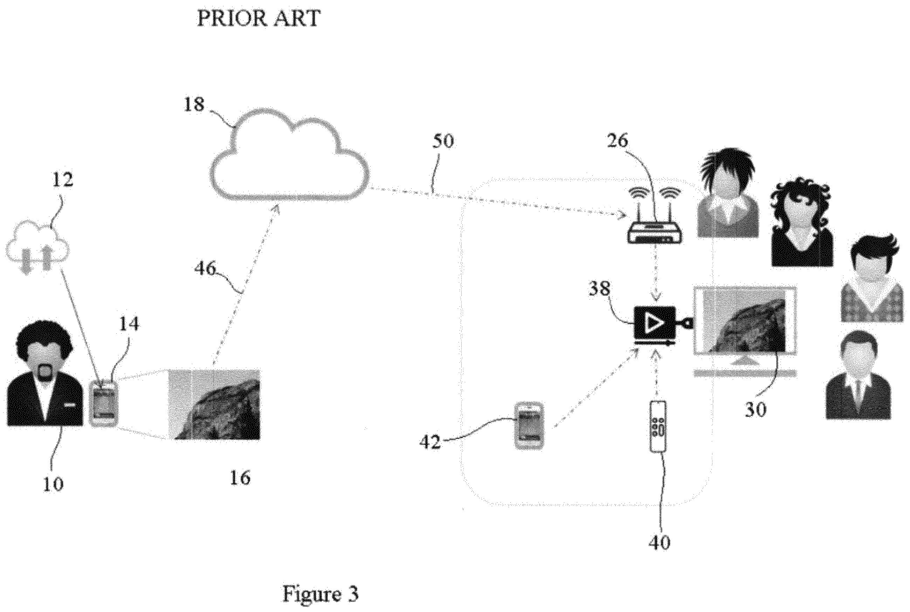

Fig. 3 shows a method of sending pictures and videos from a remote location using a cloud storage app installed on a set-top device 38. A set-top device remote 40 or smartphone with set-top app remote 42 controls the set-top box 38. The set-top box is connected to the cloud service 18 using a WiFi router 26. In the method set out in Fig. 3, at least the following components are necessary: (a) the set-top box 38 configured to connect to the local WiFi router and connected to the TV 30 by an HDMI port, and (b) the cloud storage app 12 and the cloud storing service 18 with sharing functionality, and c) the WiFi router 26. This set up will require the recipient to learn how to navigate and login to see photos and videos that are stored on the app servers.

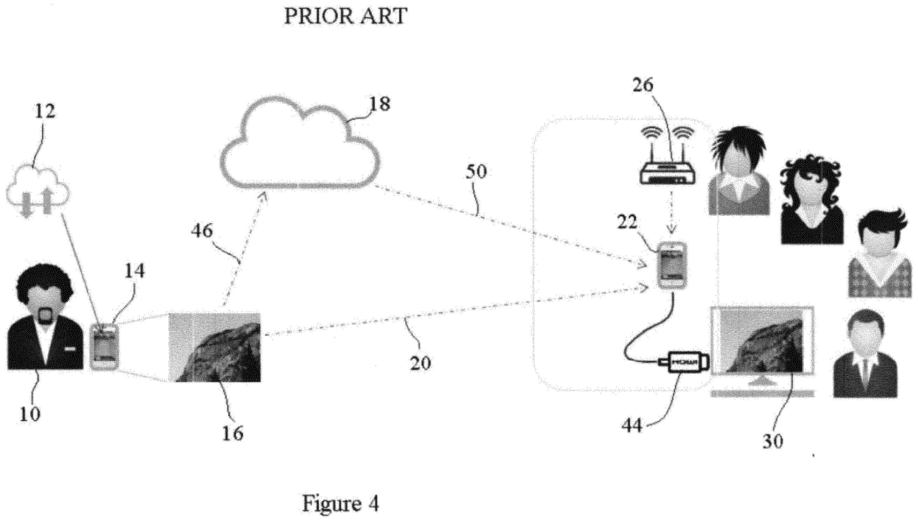

Fig. 4 shows a method of sending pictures and videos from a remote location using a smartphone 22 connected directly by an HDMI cable 44 to the TV 30. In this method as shown in Fig. 4, the recipient at the distant location needs the following components: (a) the mobile device 22 that is compatible with the HDMI cable 44, (b) an available HDMI port on the TV, (c) a cloud storage mobile app 12 and cloud storage service 18 with sharing functionality and (d) the WiFi router 26.

There are various drawbacks of the present methods of sending photos and videos to remote locations.

A person, who resides at the location of the remote TV, needs a clear understanding of how casting technology works and must have the necessary hardware components (i.e.- Set-Top like device) required to enable viewing of pictures and videos on a large screen TV. The person might also need to subscribe to and understand how to use a cloud storage solution.

If the person did not have a Smart TV, that person would have to invest in the purchase of a specialized set-top box, such as Amazon Fire™ TV, Apple TV™, Google Chromecast™, Roku™ boxes, Xbox 360™, Xbox One™, etc., to enable connectivity to the mobile device and/or a cloud storage service.

Internet service at the remote site of the TV is usually required. Without internet service, there are few options, such as using WiFi Direct with a compatible TV and ensuring someone at the remote site has a mobile device capable of WiFi Direct and does not mind using his/her LTE data plan to receive the pictures and videos on the mobile device to display on a large screen TV.

A cloud storage mobile app and cloud storage service with sharing functionality are also required since this is one of the few methods for people to share pictures and videos when living at distant locations. The person transmitting the multimedia must also take time to manage access to their cloud content to ensure it is secure and private. Additionally and in many cases, the person sending the multimedia will be required to pay for it to be stored on the cloud since people usually fill up the initial free space allocation quite fast. Furthermore, it requires both the recipient and the sender and devices at both sites to sign up for the cloud storage service to upload/download the data.

Having personal pictures and videos stored on the cloud or someone else's mobile device always presents an added security and privacy risk since once the data is remotely stored, securing this data requires trusting that the cloud service provider has implemented a thorough data security strategy, which cannot always be guaranteed.

Using a physical cable to connect one's smart device to a large screen TV can be challenging, since the cable could be lost or not around to be used when it is required, or the cable may not have the correct adapter to support a particular mobile device.

Currently, most picture and video sharing technology to view these on a large screen TV is focused on the owner of the mobile device and the viewing audience (friends and family) all being in the same location.

Other attempts at sharing photographs and videos to remote televisions may require all users to be customers of a specific cable provider or must own a specific set-top box that is preconfigured to use specific receiving technology. This means that both the sender and receiver must send or receive content using the specific cable provider's network and the pictures and videos may be stored on the cable providers internal servers for extended periods of time, which increases the risk that the multimedia can be accessed or downloaded by unauthorized parties.

Still other attempts at sharing photographs and videos to remote television require connections from set-top box to set-top box and require various additional hardware technology to transmit multimedia between locations. This type of solution is cumbersome and expensive for the party receiving the multimedia.

These attempts at solutions often require complicated modifications to either software or hardware on the receiving end. Other such attempts often require complicated steps to be taken to access information on the receiving end, such as logging into a cloud-based service or using local casting.

### SUMMARY

There is provided in one embodiment a system that enables individuals such as friends and relatives who live in a distant location to view multimedia, such as pictures and videos, from a distant mobile device directly to a large screen TV without having to use or understand added devices and technology to enable access to the service.

There is provided in one embodiment a system for sending multimedia to a remote television. A database is configured to store credential information associated with at least a first user and a second user. A server is connected by a telecommunications network to a mobile device associated with the first user. The server is configured to receive a request from the mobile device to share multimedia with a destination television associated with the second user, access the stored credential information on the database in response to receiving the request from the mobile device to share the multimedia, establish a connection between the mobile device and a destination television associated with the second user after determining that the second user is authorized to receive the multimedia and cause the multimedia to be transmitted to the destination television in real-time, in which the multimedia is stored no more than transiently during transmission from the mobile device to the destination television.

In another embodiment there is provided a method for sending multimedia to a remote television. Credential information associated with at least a first user and a second user is stored. A request is received from a mobile device associated with the first user to share multimedia with a destination television associated with the second user. A determination is made whether the second user is authorized to receive the multimedia from the first user using the stored credential information. A connection is established between the mobile device and the destination television after determining that the second user is authorized to receive the multimedia. The multimedia is transmitted to the destination television in real-time, in which the multimedia is stored no more than transiently during transmission from the mobile device to the destination television.

In further embodiments, the destination television is at a remote location relative to the mobile device.

In yet further embodiments, establishing a connection between the mobile device and the destination television further comprises establishing a connection between the mobile device and a backend system of a telecommunications service provider.

In yet further embodiments, transmitting the multimedia to the destination television further comprises transmitting the multimedia to the destination television through the backend system to a set-top box using a reserved channel.

In yet further embodiments, an event notification is displayed on the destination television when the multimedia is ready to be transmitted to the destination television.

In yet further embodiments, the destination television is associated with a set-top box and establishing a connection between the mobile device and the destination television further comprises establishing a connection through a telecommunications network between the mobile device and the set-top box associated with the second user.

In yet further embodiments, the destination television is a smart TV and establishing a connection between the mobile device and the destination television further comprises establishing a connection through a telecommunications network between the mobile device and the smart TV.

In yet further embodiments, the telecommunications network comprises a computer network.

In yet further embodiments, the telecommunications network further comprises a cellular network.

In yet further embodiments, the connection between the mobile device and the destination television is encrypted.

In yet further embodiments, storing credential information further comprises: the first user registering the mobile device with a mobile client app, and the second user registering the destination television with a media app.

In yet further embodiments, receiving a request from a mobile device associated with the first user to share multimedia with a destination television associated with the second user further comprises the first user selecting the registered destination television using the mobile client app.

In yet further embodiments, storing credential information further comprises storing a list of selected users associated with the second user from whom the second user will accept multimedia.

In yet further embodiments, the method determines that the destination television is on and sends an indication that the mobile television is on to the mobile device.

In yet further embodiments, the second user is provided with a selectable notification that allows the second user to accept or decline the multimedia.

These and other aspects of the system and method are set out in the claims, which are incorporated here by reference.

### BRIEF DESCRIPTION OF THE FIGURES

Embodiments will now be described with reference to the figures, in which like reference characters denote like elements, by way of example, and in which:
Fig. 1 is a high-level schematic diagram of a prior art method of casting multimedia to a remote television using a mobile phone at the remote location connected to a set-top device using WiFi.
Fig. 2 is a high-level schematic diagram of a prior art method of casting multimedia to a remote television using a mobile phone at the remote location connected to a set-top device using WiFi Direct or DNLA.
Fig. 3 is a high-level schematic diagram of a prior art method of casting multimedia to a remote television using a set-top device that can download stored multimedia from a cloud storage service online.
Fig. 4 is a high-level schematic diagram of a prior art method of casting multimedia to a remote television using a mobile phone at the remote location connected to the television using an HDMI cable.
Fig. 5 is a flow diagram showing a method for sending multimedia to a remote television.
Fig. 6 is a high-level schematic diagram showing the mechanics of an embodiment for sending multimedia to a remote television.
Fig. 7 is a high-level schematic diagram of a system for sending multimedia to a remote television by connecting a mobile device to a service provider backend system.
Fig. 8 is a high-level schematic diagram of a system for sending multimedia to a remote television using a non-service provider specific set-top box.
Fig. 9 is a high-level schematic diagram of a system for sending multimedia to a remote smart television.
Fig. 10 is a high-level schematic diagram of a logical solution design showing connectivity options for sending multimedia to a remote television.

### DETAILED DESCRIPTION

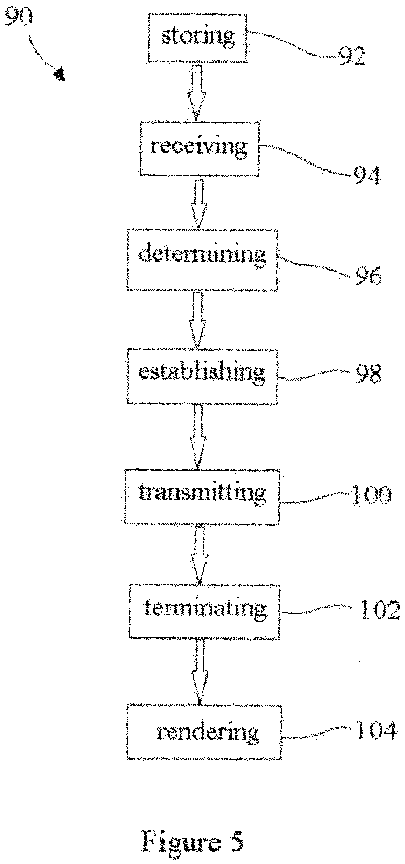

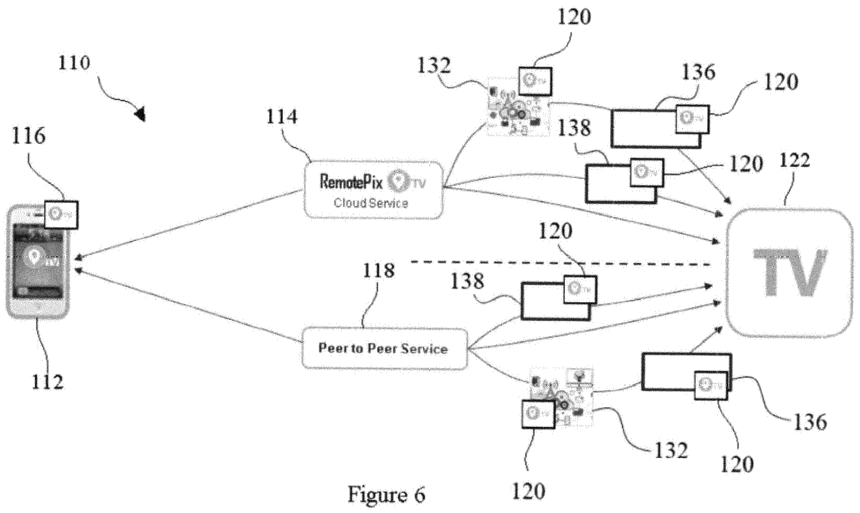

In an embodiment shown in Fig. 5 there is a method for sending multimedia to a remote television. At 92, credential information associated with at least a first user and a second user is stored. At 94, a request is received from a mobile device 112 (Fig. 6) associated with the first user to share multimedia with a destination television 122 (Fig. 6) associated with the second user. The mobile device could be one of a number of different types of devices, such as a smartphone, tablet, laptop or other computer system that has stored multimedia that the first user may wish to share with the second user at a remote location. The multimedia could be any type of information that the first user wishes to share, including photographs, videos, audio, or other types of shareable content.

At 96, it is determined whether the second user is authorized to receive the multimedia from the first user using the stored credential information. At 98, a connection is established between the mobile device 112 and the destination television 122 after determining that the second user is authorized to receive the multimedia. At 100, the multimedia is transmitted to the destination television in real-time, in which the multimedia is stored no more than transiently during transmission from the mobile device 112 to the destination television 122. At 102, the connection between the mobile device 112 and the destination television 122 terminates at the remote device, for example at the backend server, the set-top box or smart TV and the connection completes. At 104, the destination television 122 renders the photographs and/or video for example using an appropriate codec on the STB or the smart TV.

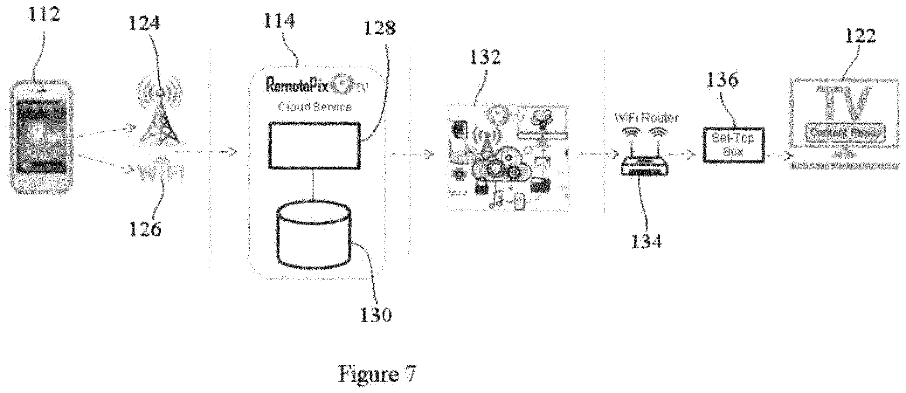

Fig. 6 is a high-level schematic showing the mechanics of a system 110 for sending multimedia to a remote television. The destination television 122 is at a remote location relative to the mobile device 112. Various different embodiments of the system in Fig. 6 are shown in Figs. 7 to 10. A cloud service 114 includes a database 130 (Fig. 7) and a server 128 (Fig. 7). The database 130 is configured to store credential information associated with at least a first user and a second user. The server 128 is connected by a telecommunications network to the mobile device 112 associated with the first user. The server 128 may be configured to: receive a request from the mobile device 112 to share multimedia with the destination television 122 associated with the second user, access the stored credential information on the database 130 (Fig. 7) in response to receiving the request from the mobile device 112 to share the multimedia, establish a connection between the mobile device 112 and the destination television 122 associated with the second user after determining that the second user is authorized to receive the multimedia, and cause the multimedia to be transmitted to the destination television 122 in real-time, in which the multimedia is stored no more than transiently during transmission from the mobile device 112 to the destination television 122. In order to establish a connection between the mobile device 112 and the destination television 122, a mobile client app 116 may be granted permission to access multimedia on the mobile device 112.

The mobile device 112 may send pictures and videos or other multimedia directly to one or more of a service provider backend system 132, a non-service provider STB 138 or Smart TV 140. Each of the backend system 132, the non-service provider STB 138 and Smart TV 140 are shown twice in Fig. 6 for clarity to show the connectivity provided using the cloud service 114 and the peer-to-peer connection 118, respectively. A connection need only be made with one of the backend system 132, STB 138 or Smart TV 140 to connect to the destination television.

In further embodiments, the server 128 may be configured to include an identification process, a registration process and an authentication or authorization process. During the registration process, the first user may register the mobile device 112 with the mobile client app 116. The second user may register the destination television with a media app 120. For example, the second user can register and assign the destination television a unique name and the first user can be made aware of the specific television name and be able to select it using the mobile client app 116. The client apps, namely mobile client app 116 and media app 120, allow for both the sender and recipient to register and select whom can send and receive multimedia data. The step of receiving a request from a mobile device associated with the first user to share multimedia with a destination television associated with the second user may include the first user selecting the registered destination television using the mobile client app 116. The stored credential information stored on the server may include a list of selected users associated with the second user from whom the second user will accept multimedia. If the first user is on the list of selected users, then the first user will be permitted to transmit multimedia to the second user.

The database 130 may, for example, store the following information with respect to the mobile subscriber and the remote television as shown in Table 1:

**Table 1**

| **Mobile Subscriber Data** | | | | | **Remote TV** | |
|---|---|---|---|---|---|---|
| Mobile Device Unique ID | MSISDN | IMSI | ICCID | IMEI | TV Unique ID | TV MAC address |

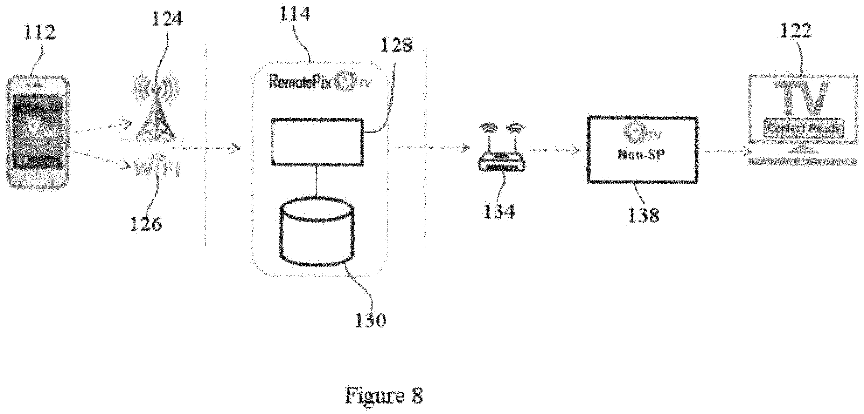

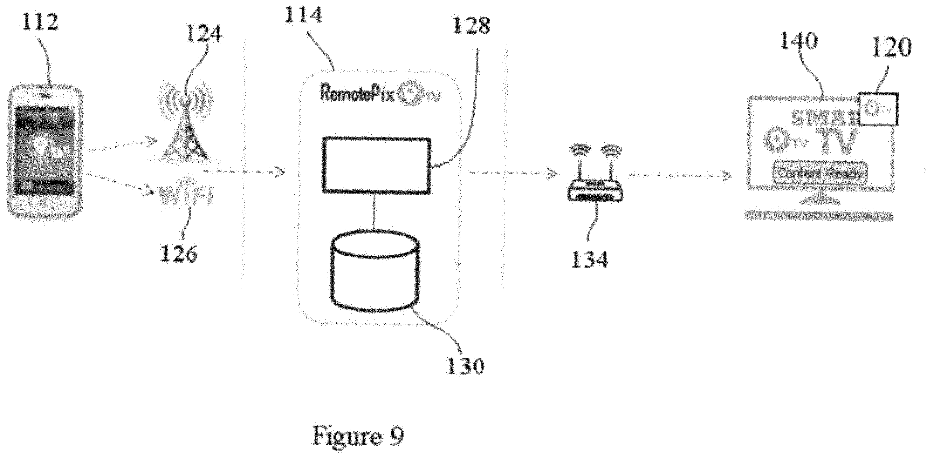

The registration process for the system is described as follows. The media app used with the system and method can be installed, in some embodiments, on the service provider backend system 132 (Fig. 7), the non-service provider set-top box (STB) 138 (Fig. 8) or within the Smart TV's native environment 140 (Fig. 9). The mobile client app 116 is associated with the mobile device 112 to allow for access to the multimedia and to facilitate the connection from the mobile device. The media app 120 is associated with the destination backend device or system where the one or more of the destinations would be a television, set-top box or backend system to provide for the connection between the mobile device and the destination television. The client app may be called a mobile client app 116 when installed on the mobile device. The media app 120 may be called a smart TV app when installed on the smart TV. The media app may be called a Backend Service Provider app when installed on the backend service provided system. The media app may be called a Non-SP Set-Top Box app (or Set-Top Box app) when installed on the Non-SP Set-Top Box.

The STB 138 or Smart TV 140 registers with the system cloud service 114 with a unique ID to easily identify and map the device 112 for the mobile device user.

The mobile client application may install on the mobile device 112. The mobile device 112 registers with the cloud service with a unique ID to facilitate identification and authorization by the device owner in the remote location. In this embodiment, the mobile device 112 must be authorized to send data to the remote site having the destination television 122. The mobile device 112 can select any remote devices that it is authorized to connect to.

Once the registration and authorization is successfully completed, the mobile device 112 sends pictures and videos or other multimedia directly to the service provider backend system 132 (Fig. 7), the non-service provider STB 138 (Fig. 8) or Smart TV 140 (Fig. 9); however, the data does not traverse or flow through the cloud service 114. After registration and authorization process is completed, this may be a peer-to-peer service 118. The mobile device 112 may connect directly to a non-service provider set top box 138 which is connected to the destination television 122.

The second user at the remote location can register for the remote service by contacting the service provider for the cloud service and requesting that the second user's television be registered with the remote service. This could be done by for example, by phone call, online or any other method so long as the cloud service provider is able to determine the television associated with the second user and register that television or set-top box within the system.

Software allows the TV modem, set-top box or Smart TV to receive data and render that data on the television screen. The system may store a unique ID and register the PVR, set-top box or Smart TV with the cloud service.

The cloud service supports the registration, authorization and connectivity process between the mobile device and the remote TV device, such as PVR, set-top box or Smart TV.

For future requests to send multimedia such as pictures and videos, the mobile device client app only verifies that it is still authorized to send data to the targeted remote site, such as the destination television 122, before sending any data.

Using a registration system supported by the cloud service may allow multimedia to be shared and viewed on a remote television with little to no involvement in learning, deploying or configuring new technology for the recipients that make use of the service.

Mobile device 112 can send pictures and videos or other multimedia to as many remote sites as authorized by the individual remote device owners. The mobile device 112 can simultaneously broadcast multimedia to any number of remote sites.

The multimedia preferably is encrypted when sent to remote sites and is not retained on a hard drive of the remote device, such as destination television 122. The multimedia is not sent from the mobile device 112 until remote device, such as destination television 122, receives a request and confirms it is ready to receive data.

As shown in Fig. 7, establishing a connection between the mobile device 112 and the destination television 122 further comprises establishing a connection between the mobile device 112 and a backend system 132 of a telecommunications service provider, such as a cable company or telephone company. Transmitting the multimedia to the destination television 122 is achieved by transmitting the multimedia to the destination television through the backend system 132 to a set-top box (STB) 136 using a reserved channel.

The multimedia content is stored at the local site within the mobile device 112. The mobile client app 116 establishes a connection with the cloud server 128 via WiFi 126 or cellular network 124 and requests connectivity to a remote STB 136 in a location that is remote from the local site. The mobile client app 116 is allowed access to multimedia such as photos and video on the mobile device 112 and communicates with cloud service 114 to send the multimedia of choice.

The cloud device registration and connectivity enabler service provided by the cloud service 114 may be located anywhere in the world. The multimedia content is sent from the mobile device 112 only after registration of both STB 136 and mobile device 112 is confirmed, and the mobile device 112 is authorized to send data to the selected remote STB 136. The cloud server 128 does not retain any data streamed from mobile device 112 to STB 136. It only authorizes and enables the communication between mobile device 112 and remote STB 136.

The media app 120 may be loaded on service provider backend systems 132 to enable registration of the specific set-top box 136 that is to receive the multimedia. The media app 120 also receives content from mobile device 112 to map to a designated reserved channel where it is streamed to the targeted set-top box 136, for example using the method as is disclosed in US Patent Publication No. 2007/0199019. The media app pings the mobile client app when the target end customer TV 122 is "ON". The app sends another message to signal the mobile device owner that the remote TV is on the reserved channel waiting to receive content.

The service provider set-top box 136 receives content from the media app via reserved TV channel for this service. No software or hardware modifications are required on the set-top box 136 or the TV 122. The content can be viewed for a set period of time before it auto-deletes. The content is not stored on the set-top box 136 any more than transiently. Content is buffered in memory for the time it takes to display the content.

For example, the data associated with the multimedia may be held in the memory of the service provider back end system 132, the non-SP STB 138 or the smart TV 140 for a specific period of time, such as five minutes or other chosen time. The users who are watching the content on the destination television can view the picture on the TV for that period of time, or until another picture is viewed, after which the counter will restart. When a video is shown, the maximum time to view the video may be a certain period of time, such as five minutes, and the video could be only playable for a certain number of replays, such as three times, after which it is deleted after the third replay. The length of video would only be allowed to be as long as the period of time for which the video is permitted to be stored. For example, if content is deleted after five minutes, then the maximum video length which can be sent may be five minutes or less.

The server may cause an event notification to be displayed on the destination television 122 when the multimedia is ready to be transmitted to the destination television 122. For example, a banner may be streamed at the bottom of the TV 122 to alert the remote customer that pictures or videos will be sent to their reserved personal content channel. This is accomplished via the media app alerting the Service Provider that the mobile device wants to send content to the remote TV 122. The event notification could display a short message/title created by mobile device which suggests what content will be displayed, for example with a notification that indicates that "Dog Pictures" are available for viewing. Prior to sending the event notification, the system may first determine that the destination television is "ON" and send an indication that the mobile television is "ON" to the mobile device. The mobile device 112 will receive a signal when the media app is running, indicating that the destination television 122 is "ON". The system will display information on the mobile device 112 to the first user that the destination television 122 is able to receive multimedia data. The second user preferably is provided with the ability to accept or reject the transfer of multimedia, for example, by the system displaying a button or other selectable notification on the alert banner or other display location at the destination television that would allow the second user to start receiving the data or reject it at that time. In this way, the second user may be provided with a selectable notification that allows the second user to accept or decline the multimedia. For example, the second user may not want to interrupt a currently playing television program to view multimedia content until after the program is finished. The second user may also be provided with the option of delaying watching the content for a certain period of time, or until after an event occurs, such as the current program is completed.

The transmitted mobile data preferably is encrypted from the point it is sent from the mobile device to the point it is received by the receiving equipment associated with the destination television, such as a smart TV or set-top box.

As shown in Fig. 8, the destination television 122 may be associated with a set-top box 138 and establishing a connection between the mobile device 112 and the destination television 122 may further include the server establishing a connection through a telecommunications network between the mobile device and the set-top box associated with the second user. As with the other embodiments shown in Figs. 6 to 10, the telecommunications network could be a computer network, such as for example WiFi 126 or a wired LAN connection or a cellular network 124 such as the LTE 4g/5g wireless network or other network. The mobile device 112 and the destination television may communicate with each other through more than one network, such as for example both computer networks and cellular networks.

The mobile client app 116 may establish a connection with the cloud server 128 via WiFi 126 or cellular network 124 and the app requests connectivity to a non-service provider STB 138 in a separate location. The reference to a 'non-service provider set-top box' means a set-top box that is not configured or managed by the backend system of a service provider that is configured to communicate directly with the mobile device 112 using the cloud service 114. For the operation of the system and method in some embodiment, a non-service provider set-top box does not require services or products from a service provider other than an internet connection. Similarly, in the embodiments which connect to a smart TV, the system does not require the services or products of a service provider other than an internet connection. In the embodiment in Fig. 7, the cloud service 114 allows the backend system 132 to communicate with the mobile device 112, which means that the multimedia may be sent directly through the cable network to the destination television 122. However, if the service provider does not provide access to its backend system to the operator of the cloud service 114, then it may not be possible to connect directly to the backend system.

The mobile client app is allowed access to multimedia such as photos and video on the mobile device and communicates with the cloud service 114 to send the chosen multimedia.

The multimedia content is sent from the mobile device 112 only after registration of both non-service provider STB 138 and mobile device 112 is confirmed, and the mobile device 112 is authorized to send data to the selected remote non-service provider STB 138. The cloud server 128 does not retain any data streamed from mobile device 112 to non-service provider STB 138. The server 128 only authorizes and enables the communication between mobile device 112 and non-service provider STB 138. The non-service provider set-top box, could be any of a number of systems that allows for multimedia content to be displayed on the television, including for example, Amazon Fire™ TV, Apple TV™, Roku Streaming Stick™, Xbox 360™ or Xbox One™. No hardware modifications are required on the Set-Top Box 138 or TV 122. The multimedia content can be viewed for a set period of time before it auto-deletes. The content is not stored on the set-top box 138 any more than transiently, as discussed with regard to the embodiment shown in Fig. 7 above. At the remote site, the media app is loaded on the non-service provider set-top box 138 to enable registration of the specific device for the cloud service. The media app receives content from mobile device 112 to display on the remote TV 122. The media app notifies mobile device 112 when TV 122 is "ON" and ready to receive content.

A notification may be displayed to inform the remote user that pictures or video are ready for viewing. For example, a banner may be streamed at the bottom of the TV 122 alerting the remote customer that pictures or videos will be sent to their TV. This is accomplished through the media app interfacing with non-service provider STB 138 such that it displays a small banner with a message at the bottom of the TV 122. The event notification could display a short message/title created by mobile device 112 which suggests what content will be displayed, such as, for example "dog pictures". The event notification may include providing the second user with the ability to accept or reject or delay receipt of the multimedia, as discussed in more detail regarding the embodiment shown in Fig. 7 above.

As shown in Fig. 9, the destination television is a smart TV 140 and establishing a connection between the mobile device 112 and the destination television is established through a telecommunications network between the mobile device 112 and the smart TV 140. At the local site, the mobile client app establishes a connection with the cloud server via a telecommunications network, such as WiFi or a cellular network and requests connectivity to a Smart TV in a remote location. The mobile client app is allowed to access multimedia such as photos and video on the mobile device 112 and communicates with the cloud service to send the chosen multimedia. Content is sent from the mobile device 112 only after registration of both Smart TV 140 and mobile device 112 is confirmed, and the mobile device 112 is authorized to send data to the selected remote Smart TV. The cloud server 128 does not retain any data streamed from mobile device to Smart TV. It only authorizes and enables the communication between mobile device and Smart TV. At the remote site, the Smart TV 140 may come with the media app pre-loaded or the app can be downloaded via the Smart TV's 140 web store. All that is required is registration of the Smart TV to enable cloud service. The media app receives content from the mobile device 112 to display on remote Smart TV 140. The media app notifies the mobile device 112 when Smart TV 140 is "ON" and ready to receive content. No hardware modifications are required on the Smart TV 140. The content can be viewed for a set period of time before it auto-deletes. Content is not stored on the Smart TV 140 any more than transiently, as discussed with regard to the embodiment shown in Fig. 7 above. An event notification may be displayed on the Smart TV when content is ready to be transmitted, as discussed in more detail regarding the embodiment shown in Fig. 7 above.

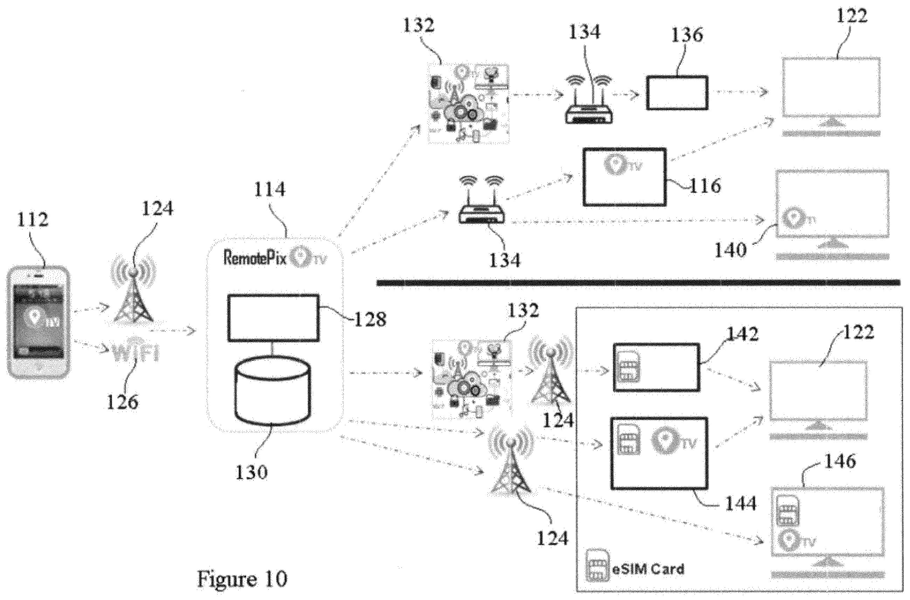

Fig. 10 show various connectivity options for a high level logical solution design of the method and system disclosed. The local mobile device 112 may connect to the cloud service 114 using a telecommunications network such as the cellular network 124 or WiFi 126. The cloud service can connect to the destination television using WiFi connectivity or other wireless technology. The cloud service 114 can connect to the service provider backend system 132 which may then connect to the set-top box 136 and then to the television 122. The cloud service 114 can also connect to a WiFi router 134 which may connect to either a non-service provider set-top box 138 or directly to the smart TV 140.

The remote system may also connect using other telecommunications networks, such as eSIM cards using LTE 4g/5g wireless technology. In this case, WiFi routers are not required for connecting the cloud service to the destination television at remote locations. As shown, the cloud service may connect to the service provider backend system 132 which in turn is connected to an eSim card enabled set-top box 142 or non-service provider set-top box 144, which both may connect to the remote destination television 122. The cloud service 114 may also connect directly to a smart TV 146 having an eSIM card directly using LTE 4g/5g wireless technology.

Immaterial modifications may be made to the embodiments described here without departing from what is covered by the claims. For example, each of the database or server or other systems disclosed may be physical, virtual or cloud-based systems so long as each is capable of implementing the methods disclosed. In those cases where the systems are physical, the functionality described for each of the database or server or other systems may be implemented by a single piece of hardware at a specific location or may make use of multiple systems at separate locations. The database and server themselves may be provided together on a single piece of hardware or multiple pieces of hardware. The network systems described may be entirely digital or analog or a mixture of the two so long as the necessary connections may be made between devices.

In the claims, the word "comprising" is used in its inclusive sense and does not exclude other elements being present. The indefinite articles "a" and "an" before a claim feature do not exclude more than one of the feature being present. Each one of the individual features described here may be used in one or more embodiments and is not, by virtue only of being described here, to be construed as essential to all embodiments as defined by the claims.

## Claims

1. A system for sending multimedia to a remote television, comprising:
a database configured to store credential information associated with at least a first user and a second user;
a server connected by a telecommunications network to a mobile device associated with the first user, the server being configured to:
receive a request from the mobile device to share multimedia with a destination television associated with the second user;
access the stored credential information on the database in response to receiving the request from the mobile device to share the multimedia;
establish a connection between the mobile device and a destination television associated with the second user after determining that the second user is authorized to receive the multimedia; and
cause the multimedia to be transmitted to the destination television in real-time, in which the multimedia is stored no more than transiently during transmission from the mobile device to the destination television.

2. The system of claim 1 in which the destination television is at a remote location relative to the mobile device.

3. The system of claim 1 or 2 in which the server is further configured to establish connection between the mobile device and a backend system of a telecommunications service provider.

4. The system of claim 3 in which the server is further configured to cause the multimedia to be transmitted to the destination television through the backend system to a set-top box using a reserved channel.

5. The system of claim 1, 2 or 3 in which the server is configured to cause an event notification to be displayed on the destination television when the multimedia is ready to be transmitted to the destination television.

6. The system of any of claims 1 to 5 in which the server is configured to establish a connection through the telecommunications network between the mobile device and a set-top box associated with the destination television.

7. The system of any of claims 1 to 6 in which the destination television is a smart TV and the server is configured to establish a connection through the telecommunications network between the mobile device and the smart TV.

8. The system of any of claims 1 to 7 in which the telecommunications network comprises a computer network.

9. The system of claims 1 to 8 in which the telecommunications network further comprises a cellular network.

10. The system of any of claims 1 to 9 in which the connection between the mobile device and the destination television is encrypted.

11. The system of any of claims 1 to 10 in which the stored credential information further comprises registration information including that:
the first user registered the mobile device with a mobile client app,
the second user registered the destination television with a media app.

12. The system of claim 11 in which the server being configured to receive a request from a mobile device associated with the first user to share multimedia with a destination television associated with the second user further comprises the server being configured to determine whether the first user selected the registered destination television as an authorized recipient of multimedia from the mobile device.

13. The system of claim 11 or 12 in which the stored credential information further comprises a list of selected users associated with the second user from whom the second user will accept multimedia.

14. The system of any preceding claim further comprising the server configured to determine whether the destination television is on and to send an indication that the destination television is on to the mobile device.

15. The system of any preceding claim further comprising the server configured to provide the second user with a selectable notification that allows the second user to accept or decline the multimedia.
